Europäisches Patentamt

European Patent Office

Office européen des brevets

(11) Publication number: **0 030 850**
**B1**

(12) **EUROPEAN PATENT SPECIFICATION**

(45) Date of publication of patent specification: **31.10.84**

(21) Application number: **80304485.8**

(22) Date of filing: **12.12.80**

(51) Int. Cl.³: **A 61 C 5/08**, A 61 C 5/10, A 61 C 13/08

(54) **Dental appliance and method of manufacture.**

(30) Priority: **14.12.79 US 103647**

(43) Date of publication of application:
**24.06.81 Bulletin 81/25**

(45) Publication of the grant of the patent:
**31.10.84 Bulletin 84/44**

(84) Designated Contracting States:
**AT BE CH DE FR GB IT LI LU NL SE**

(56) References cited:
**AT-B- 124 442**
**DE-A-2 052 635**
**DE-C- 292 406**
**DE-C- 603 164**
**DE-C- 674 674**
**GB-A-1 502 813**
**US-A-2 000 285**
**US-A-2 249 890**
**US-A-2 317 103**
**US-A-3 464 837**
**US-A-3 549 393**

(73) Proprietor: **COORS PORCELAIN COMPANY**
**600 Ninth Street**
**Golden Colorado 80401 (US)**
(73) Proprietor: **Sozio, Ralph Bennet**
**318 Beacon Street**
**Boston Massachusetts 02116 (US)**
(73) Proprietor: **Riley, Edwin Joseph**
**47 Harland Street**
**Milton Massachusetts 02186 (US)**

(72) Inventor: **Sozio, Ralph Bennet**
**318 Beacon Street**
**Boston, Massachusetts 02116 (US)**
Inventor: **Riley, Edwin Joseph**
**47 Harland Street**
**Milton Massachusetts 02186 (US)**

(74) Representative: **Wisher, Michael Frederick et al**
**Urquhart-Dykes & Lord 47 Marylebone Lane**
**London W1M 6DL (GB)**

Courier Press, Leamington Spa, England.

## Description

### Technical field

This invention relates to a method for the fabrication of dental appliances such as crowns, bridges and the like, and to dental appliances made by such method.

For simplicity, the invention and its background will herein be principally with reference to tooth crowns and their manufacture, though it will be understood that the invention has application to other dental appliances such, for example, as dental bridges.

### Background art

A dental crown is one of the most important restorations in dentistry in that it affords the restoration of deteriorated teeth to a state of health and function. One of the prime requisites for a successful dental crown is that it adapt as perfectly as possible to the prepared tooth structure (i.e. the tooth is milled to a desired shape upon which the dental crown is placed). Anything less than substantially perfect fit, especially at the crown margin, can result in mechanical failure such as crown fracture or loosening or biologic failure such as decay, periodontal disease, or occlusal problems. At the present state of the art the materials available for the fabrication of crowns include the noble metals such as gold base alloys, acrylics such as polymethyl methacrylate, dental porcelain, or a composite of a metal and a compatible porcelain or acrylic.

At the present date the most widely employed method of fabricating dental crowns is to cast a metal substrate which is subsequently covered with a dental porcelain veneer.

The metal substrate is obtained by an indirect process known as the "lost wax" technique. Specifically, the substrate is first formed and shaped in wax. This involves making the impression of the prepared tooth, casting dental stone against the impression to form a master die, molding a body of wax against the master die and then shaping the upper portions of the wax body to duplicate the external shape of the tooth crown desired. The wax form must then be accurately converted to the metal. To accomplish this the wax form is invested into a refractory material, thus forming a mold. The wax is then eliminated by melting or burning, thus creating a cavity into which the metal, heated to a molten state, is cast. Hence, the wall of the cavity intended to be an exact replica of the prepared tooth can suffer inaccuracies because of the three-step technique needed to prepare it preparation of the master die, preparation of the wax form from the master die, and preparation of the mold from the wax form. This renders the process technique-sensitive. The process is even further technique-sensitive in that each metal alloy possesses a specific casting shrinkage for which there must be accurate compensation. This compensation is critically dependent upon the proper selection and skillful manipulation of all materials employed. The technique is sensitive in that failure can occur at any of the numerous steps involved, such as distortion of the wax form, improper investing procedure, inadequate expansion of the mold, improper burn-out procedure, or improper melting and casting of the metal. A principal drawback of this technique is that many hours are consumed before a failure in the casting stage can be detected. The success or failure of the composite ceramic-metal crown is also greatly dependent on the proper finishing and handling of the surface of the metal to which the ceramic is applied. Proper finishing which is difficult and time consuming, is essential to the successful bonding of the ceramic to the metal substrate. Still further, the inherent physical differences between the porcelain veneer and the metal substrate, such as differences in thermal expansion, give rise to numerous potential avenues for failure.

An alternative technique, which eliminates the need for a metal casting, is to form the crown of a dental porcelain with a thin underlayer of platinum foil. The thin platinum foil is carefully shaped to a replica of the prepared tooth and the dental porcelain is then overlaid onto the foil which supports the porcelain during the subsequent firing cycles necessary. This procedure is extremely technique-sensitive, requiring skillful and meticulous processing. Proper and accurate shaping of the platinum foil over the replica is extremely difficult and frequently leads to poorly fitted crowns. Additional problems of fit arise due to the shrinkage of the dental porcelain which often distorts the thin platinum matrix during firing. It is therefore more difficult to obtain the desired fit with this crown as compared to the cast metal-porcelain composite.

### Disclosure of the invention

The present invention provides a dental appliance which has excellent strength, durability, density, appearance and fit but yet which can be made at relatively low cost both by reason of the material used and, even more significantly, by reason of simplified processing. In accordance with the invention, the tooth crown or other dental appliance has a tooth-engaging substrate formed of a shrink-free ceramic. Where, as is generally the case, it is desired that the appliance have greater translucence and closer color match to that of the natural tooth, the substrate is coated on its outer surfaces with a porcelain or glaze veneer having the whiteness and degree of translucency desired.

A preferred shrink-free ceramic for the practice of the invention will be described in detail hereinafter; however, suffice it to say at this point that by the term "shrink-free ceramic" is meant a ceramic made from a ceramic powder formulation which, when compacted and then fired to maturity, converts to a dense, hard, monolithic body which has substantially the same volume and shape as were the volume and shape of the ceramic powder compact prior to firing. Because the ceramic does not undergo shrinkage when fired to maturity, i.e. to high strength and hardness, the powder compact can, prior to firing, be formed to the identical size and shape desired for the crown or other appliance with complete assurance of the required perfect fit to the prepared tooth to which it is to be secured. And because the ceramic powder can be readily molded at relatively low temperature into a compact of any desired shape and with the resulting compact itself being relatively soft such that portions thereof can be easily removed for any further shaping as might be required, the invention provides much simplified processing for dental crowns or other appliances having the required perfect fit along with high strength and all other desired characteristics.

The method of the present invention involves the following steps:

a. Forming a die which is a replica of the prepared tooth;

b. moulding against said die a body of expendable thermoplastic material such as wax or a thermoplastic polymer which can subsequently be easily converted to a fluid state;

c. moulding a body of investment material against the body of expendable material while the body of expendable material remains on said die, thereby to form a female mould;

d. converting said body of expendable material to a fluid state by applying heat to said body to cause its removal from between said die and female mould thereby to provide a mould cavity between said die and female mould;

e. moulding a body of raw particulate ceramic in said mould cavity thereby to form a compact of said raw particulate ceramic having as an undersurface a recess identical in shape and size to said die; and

f. thereafter firing said compact to a hard monolithic ceramic body, said ceramic being of a formulation which undergoes no shrinkage during firing such that the fired ceramic body is substantially identical in shape and size to said compact prior to firing whereby said fired body has an undersurface which fits substantially perfectly onto the prepared tooth.

2. A method as set forth in Claim 1 wherein, prior to moulding the body of investment material against the body of expendable material, the exposed surfaces of the body of expendable material which has been moulded against said die are formed to a shape which at least approximates that desired for the external surfaces of the appliance.

As a last step, generally necessary for purposes of matching the appearance of the natural tooth, the fired shrink-free ceramic substrate, so manufactured, is coated with a suitable porcelain veneer or glaze thereby completing preparation of the appliance which is thereafter secured to the prepared tooth.

As will be discussed in greater detail hereinafter, the first step—that of preparing the die—can be accomplished by the technique currently and for many years used for preparation of the master dies for making dental crowns and other appliances by the prior art methods such as those described above. Then, a mold is prepared with the die as a wall portion thereof. To this end wax (which can be a wax such as paraffin or some other thermoplastic such as an acrylic or other synthetic thermoplastic polymer) can be molded against the die, after which the remaining surfaces of the resultant wax body can be shaped to duplicate the external crown shape desired. Dental stone or the like is then cast against the wax body thereby to form a mold in which the die itself serves as the mold wall intended to be an exact replica of the prepared tooth. Mold preparation is completed by melting or burning out the wax or other thermoplastic material. Such mold is then used for shaping the shrink-free ceramic to the crown shape desired. Hence, the surface portion of the crown which fits against the prepared tooth is formed by shaping it against the die itself rather than against a mold wall prepared from a wax body shaped by molding the wax against the die. This process simplification greatly increases the closeness and accuracy of fit of the crown to the prepared tooth and it is enabled by the fact that the shrink-free ceramic can be shaped at low temperature, as compared with the temperatures required for casting metal.

In the preferred method as just described, the entire final shape of the shrink-free ceramic compact is accomplished simultaneously with the shaping of that portion of the compact which, after firing, is to fit against the prepared tooth. However, it is within the purview of the invention to form the non-tooth engaging portions of the compact to the final desired shape subsequent to forming the compact against the die. That is, the wax body formed against the die can, if desired, be shaped on its external surfaces only roughly to the external shape desired of the compact, leaving it for further and final shaping of such surfaces of the compact after it has been molded. As has already been mentioned, such final shaping of the powder compact is relatively simple, since the compact is quite soft prior to firing.

The above and other features and advantages of the invention will appear more clearly from detailed description of preferred embodiments which follows.

Brief description of the drawings

Figure 1 is a flowchart showing steps involved in the practice of a preferred embodiment of the invention;

Figure 2 is a schematic view of molding apparatus for practice of the preferred embodiment; and

Figure 3 is a cross-sectional view of a dental appliance embodying and fabricated by the method of the present invention.

Best mode for carrying out the invention

As has already been made clear, a key feature of the present invention is the use of shrink-free ceramic as the material for the dental appliance substrate. Various shrink-free ceramics have been proposed for use as industrial ceramics but before further discussing them, it is appropriate to mention briefly some of the characteristics of more conventional ceramics and their manufacture.

Conventional ceramic bodies, typically alumina ceramics, are manufactured by forming a raw batch of the desired ceramic ingredients in particulate form, (e.g. aluminum oxide) plus a binder, molding or otherwise forming the raw batch into a compacted body, and then firing the compacted body to sinter or vitrify the ceramic.

During the firing operation there is considerable shrinkage—generally from about 10% to 20%—which means that the compact must be made larger than the desired fired body. Also, because shrinkage is never exactly uniform throughout the body, there is always a certain amount of warpage or distortion—though with good quality control it is generally possible to maintain warpage or distortion within the bounds of normal tolerances for electrical insulators, mechanical components and the like industrial ceramic bodies.

Shrinkage occurs for one of a combination of two reasons. First, no matter that even high pressure is used to mold or otherwise form the compact, the density of the compact is not as high as theoretically possible—there is always some porosity—to the end that there is some shrinkage when the compact fires to a high density non-porous monolith. The use of an organic binder in the compact, which is generally desirable to add green strength, may contribute to the porosity of the compact since it is vaporized or burned out during the subsequent firing operation to mature the ceramic to dense monolithic structure. Secondly where the ceramic ingredients undergo chemical or crystalline transformation during the firing, if the ceramic formed is of greater density and lesser volume than the raw ceramic ingredients, then this also contributes to the shrinkage.

Generally, reason (1) cannot be entirely eliminated even for the manufacture of shrink-free ceramic bodies. However, in the case of most shrink-free ceramic bodies, the formulation of raw particulate ceramic ingredients is one wherein one or more of the ingredients undergo either chemical or crystalline transformation during the firing and with the resultant ceramic formed by way of the chemical or crystalline transformation occupying a greater volume than that of the raw ingredients, to the end that this increase in volume exactly compensates for the decrease in volume caused by reason (1). Hence, for example, it is known that kyanite converts to mullite and silica upon firing, the combined volumes of the mullite and silica being greater than the volume of the kyanite. Accordingly, it is known to formulate a ceramic batch of kyanite, generally along with other ceramic ingredients, the amount of kyanite being such as to produce, during firing, a volume increase sufficient to compensate for the shrinkage which would otherwise occur by reason of the inclusion of binder and the relatively high porosity of the compact prior to firing. Various and diverse examples of shrink-free ceramics are discussed in the article entitled "Porcelains Having Low-Firing Shrinkage", Volume 43, No. 5 (1964) Ceramic Bulletin of the American Ceramic Society. United States Patent 3,549,393 Elarde also discloses such ceramics.

In addition to being shrink-free, the ceramic used in the practice of the invention should have high flexural strength (preferably above 103 MPa (15,000 psi)), high compressive strength preferably above 350 MPa (50,000 psi)), low porosity and commensurately high density (preferably above 80% of the theoretically highest density possible for the ceramic used), and a low coefficient of thermal expansion (preferably below $8.0 \times 10^{-6}$ °/C).

The preferred shrink-free ceramic, and processing thereof, for the practice of the present invention is that set forth in EP—A—30851, filed concurrently herewith. Such shrink-free ceramic body utilizes the fact that when aluminum oxide and magnesium oxide combine, during firing, to form magnesium alumina spinel (MgO $Al_2O_3$) there is a volume increase. Also, in this preferred shrink-free ceramic the binder used is a silicone resin containing a high percentage (upwards of about 50% by weight) SiO groups to the end that upon binder burnout during firing, a major portion thereof remains in the resulting ceramic body as silica or silicate.

The following is the most preferred batch formulation for such shrink-free ceramic:

| | |
|---|---|
| $Al_2O_3$ (particle size, .4 to 10 microns—average 2.5 microns) | 100 grams |
| $Al_2O_3$ (—325 mesh, Tyler) | 40 grams |
| $BaO.SiO_2.Al_2O_3$ glass (53% BaO, 42% $SiO_2$, 5% $Al_2O_3$) | 30 grams |
| MgO (—200 mesh, Tyler) | 20 grams |
| Edgar plastic kaolin | 9 grams |
| Calcium stearate | 2 grams |
| Acrawax C (steryl amide wax, melting temperature 290°F) | 2 grams |
| silicone resin | 28 grams |

The variated particle size of the ceramic batch is to provide high compaction density. The calcium stearate and Accrawax function as lubricants during the compaction operation. When the above body is fired to a temperature of about 1300°C, the magnesia and some of the alumina combine to form the spinel, and other of the ingredients, including silica from the silicone resin, form a glassy phase, the resultant matured body being possessed of a high density (approximately 2.7 g/cc.), excellent physical strength (flextural strength upwards of 103 MPa (15,000 psi); compression strength upwards of 345 MPa (50,000 psi)) and a low coefficient of thermal expansion (below $6.0 \times 10^{-6}$°/C). During the firing there is no significant shrinkage, and in this regard it is desirable to fire the ceramic on a gradual schedule, for example, by first gradually heating to about 500°C and holding the body there for about 16 hours, and thereafter gradually raising the temperature, over a period of about 9 hours, to 1300°—1320°C, but with substantially no hold being required at this highest firing temperature. By way of the gradual heating, escape of SiO groups from the silicone resin is inhibited to the end that substantially all of the SiO groups of the silicone resin remain in the fired body as silicate.

As discussed in the aforementioned patent application filed concurrently herewith, variations from the above formulation can be used, the key ingredients in the preferred formulation being the alumina and magnesia, the glassy or glass-forming ingredients to provide a glassy phase; and silicone resin having a high percent of SiO groups—upwards of 50%—to function as the binder.

It will be also understood that whereas the afore-described ceramic has, to date, been found to be best and hence is most preferred, other shrink-free formulations can be used for the practice of the invention.

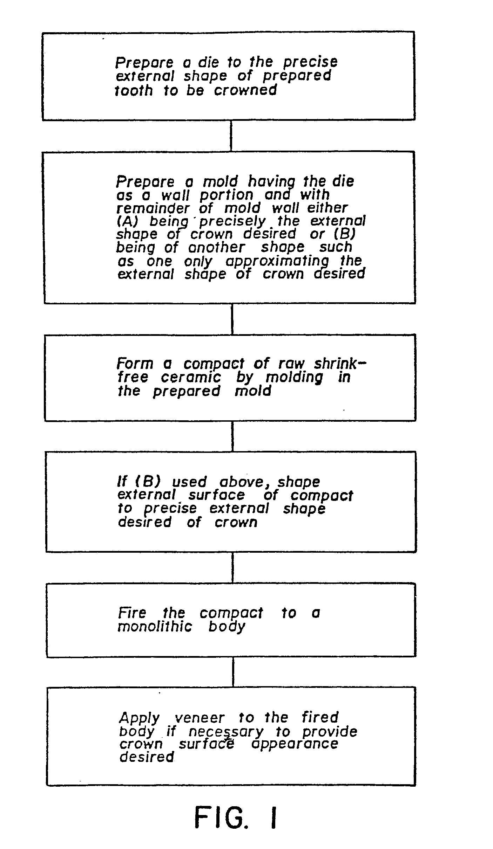

Reference is now made to the flowchart shown in Figure 1.

The first step involves preparation of the die to the precise shape of the prepared tooth. This can be acomplished in the manner currently used and well-known to those skilled in dental art. Briefly, the dentist prepares the tooth to be crowned by removing enough of the tooth structure to allow proper thickness of the final crown, after which the dentist secures a negative of the prepared tooth with a suitable impression material. The die is then made by molding or casting dental stone or the like into the negative. Thereafter this die is related to a model of the opposing arch (upper to lower teeth) on an articular which simulates jaw movements. Where the die at this stage is of multiple teeth, the dies for the individual teeth to be crowned are then separated by fine saw blades to allow easy manipulation of the dies and then trimmed, i.e. ditched, such that the margins (the exact point where the crown is to end) are visible and accessible, all as well known in the dental art.

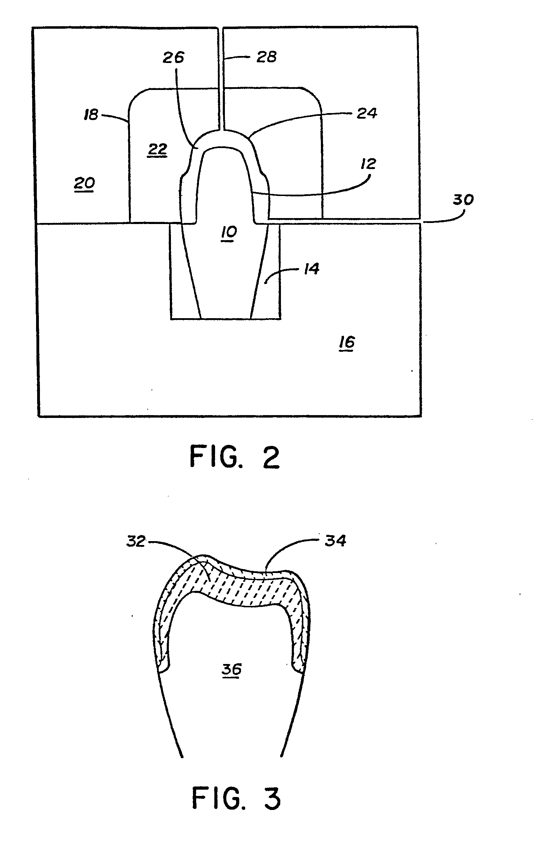

Next the die, duplicative to the tooth to be crowned, is secured to form a portion of a mold for the molding of the shrink-free ceramic raw batch. Reference is made to Figure 2 which depicts such a mold. In Figure 2, 10 is the die the outer surface 12 of which is duplicative of the prepared tooth to be crowned and the lower portion of which is simply a base set into an anchoring material 14, such as gypsum, within a recess in a lower mold block 16. Within a recess 18 in an upper mold block 20 is a female mold 22 the inner surface 24 of which defines, in combination with the die, the mold cavity 26 for molding the shrink-free ceramic formulation. An opening 28 is provided for admission of the shrink-free ceramic formulation into the mold and a second opening 30 is provided as a vent for the escape of air during the admission. Prior to use of the mold for molding the shrink-free ceramic it is best to apply to the surface of the mold cavity a thin film of a suitable mold release agent, such as stearic acid or colloidal graphite.

Cardinal to the invention is that a shrink-free ceramic formulation be shaped against the die under sufficient pressure to assure complete conformity of the shrink-free ceramic formulation to the die. It is desirable, though not essential to the practice of the invention in its broadest scope, to accomplish this by a molding operation wherein the mold shape is such that the outer surfaces of the substrate which is molded are of the final shape desired. This involves preparation of the female mold to provide such shape and this can be accomplished by the use of a "lost wax" technique. That is, a wax, such as paraffin, or a thermoplastic polymer such as an acrylic or the like heat softenable material is applied over the surface of the die and built up and sculptured to the external shape of the desired substrate after which a material, such as gypsum, is cast against the wax or the like material and allowed to set to hardness. The assembly is then heated to burn out or melt out the wax, thermoplastic polymer or the like.

Particularly where the mold is so prepared so as to mold the shrink-free ceramic formulation to the final shape desired for the substrate, it is preferred that the molding operation be one of the transfer molding, as set forth in the aforementioned Patent Application EP—A—30851 filed concurrently herewith. Briefly, the method involves the preparation of a pre-form of the compacted shrink-free ceramic formulation, this pre-form being thereafter heated sufficiently to where it is flowable and the material thereof transferred by pressure into the mold. Just as is true of compression molding and injection molding, either of which can be used for the practice of the invention, transfer molding is broadly well-known in the plastics molding art. In this regard, it should be mentioned that where the binder used in the shrink-free ceramic formulation is a silicone resin, the overall formulation can be considered, for purposes of molding, as a highly filled organic polymer, and since silicone resin softens prior to curing, it can be either compression molded at a temperature to cause it to cure or it can be injection molded at a lower temperature at which it remains a thermoplastic. Where the preferred shrink-free ceramic formulation specified above is used and is formed into a compact by molding, it is quite satisfactory to use a molding temperature of about 150°C.

The molding can also be accomplished by the so-called isostatic molding technique which is well known in the industrial ceramics manufacturing art and which is really more in the nature of a cold pressing operation. Briefly, isostatic molding involves the use of an elastomeric mold to which hydraulic or the like external pressure is applied thereby to compress and compact the ceramic raw batch contained therein into a self-sustaining compact.

As has been alluded to earlier herein, it is not necessary to the practice of the invention, in its broadest scope, to mold the shrink-free ceramic formulation to the precise external shape desired for the substrate but rather it is only necessary to mold the tooth engaging portion thereof (i.e. the portion molded against the die) to the final desired shape. Hence, the mold surface portion depicted at 24 in Figure 2 need not be shaped to the precise external shape desired for the substrate. Instead, the substrate can be molded to another external shape, e.g. to only approximately the final external shape desired, and then after the molding operation, the final desired external shape can be imparted to the molded substrate as by removing portions thereof to impart the final desired shape. This is easily accomplished because the shrink-free ceramic in its unfired state is quite soft, with a chalk-like consistency, and hence can be readily sculpted. Of course in all cases the sprue and any flash are best removed prior to firing.

After the molding operation the molded substrate is fired to mature the ceramic as previously described. Since there is no shrinkage during the firing operation, the fired crown is of precisely the same shape and volume as prior to firing.

As a last step, generally necessary to simulated the appearance of a natural tooth, a veneer is applied to the fired substrate. This involves coating the external surfaces of the substrate with a porcelain frit or glaze and the heating to cure the veneer. It will be understood that the precise composition of the veneer will depend on the whiteness and translucency desired for the crown, or other appliance, and the degree of whiteness of the substrate itself. Hence, in some instances the veneer can be a translucent glaze and in other substances, more common, it will be a white dental porcelain of the general type currently used for veneering cast metal substrates. However, in all cases it is preferred that the veneer selected have a coefficient of the thermal expansion which matches or is close to that of the fired shrink-free ceramic substrate.

Figure 3 is illustrative of a crown made in accordance with the invention, the crown consisting of the shrink-free ceramic substrate 32 coated with a thin veneer 34 and secured by a suitable dental cement to the prepared tooth 36.

It will be understood that whereas the invention has been described in its details with reference to preferred embodiments thereof, various changes and modifications may be made all within the full and intended scope of the claims which follow.

## Claims

1. A method for making a custom fitted dental appliance such as a tooth crown or bridge to be secured to a prepared tooth comprising the steps of:

a. forming a die which is a replica of the prepared tooth;

b. moulding against said die a body of expendable thermoplastic material such as wax or a thermoplastic polymer which can subsequently be easily converted to a fluid state;

c. moulding a body of investment material against the body of expendable material while the body of expendable material remains on said die, thereby to form a female mould;

d. converting said body of expendable material to a fluid state by applying heat to said body to cause its removal from between said die and female mould thereby to provide a mould cavity between said die and female mould;

e. moulding a body of raw particulate ceramic in said mould cavity thereby to form a compact of said raw particulate ceramic having as an undersurface a recess identical in shape and size to said die; and

f. thereafter firing said compact to a hard monolithic ceramic body, said ceramic being of a formulation which undergoes no shrinkage during firing such that the fired ceramic body is substantially identical in shape and size to said compact prior to firing whereby said fired body has an undersurface which fits substantially perfectly onto the prepared tooth.

2. A method as set forth in Claim 1 wherein, prior to moulding the body of investment material against the body of expendable material, the exposed surface of the body of expendable material which has been moulded against said die are formed to a shape which at least approximates that desired for the external surfaces of the appliance.

3. A method as set forth in Claim 1 wherein surfaces of said compact other than said undersurface are reshaped after said molding of the compact to a shape which at least approximates that desired for the external surfaces of the appliance.

4. A method as set forth in Claim 1 wherein the surfaces of the fired body other than said undersurface are coated with a veneer which simulates the appearance of a natural tooth after which the body is again fired to cure the veneer.

5. A dental appliance made by the method set forth in Claim 1, 2, 3 or 4.

## Patentansprüche

1. Verfahren zur Herstellung eines individuellen Zahnersatzes, wie einer Krone oder Brücke, der auf einen präparierten Zahnstumpf aufgebracht wird, gekennzeichnet durch folgende Verfahrensschritte:

a) Bildung einer Patrize (10) als Abbild des präparierten Zahnstumpfes (36),

b) Aufformung eines Körpers aus thermoplastischem Verbrauchsmaterial auf die Patrize (10), wie Wachs oder ein thermoplastisches Polymeres, das später leicht in einen flüssigen Zustand überführt werden kann,

c) Aufformung eines Körpers aus Feingießmaterial auf den Körper aus Verbrauchsmaterial, während der Körper aus Verbrauchsmaterial auf der Patrize (10) verbleibt, unter Bildung einer Matrize (22),

d) Überführung des Körpers aus Verbrauchsmaterial in den flüssigen Zustand durch Erhitzung dieses Körpers zur Entfernung des zwischen Patrize (10) und Matrize (22) befindlichen Verbrauchsmaterials und Bildung eines Formhohlraumes (26) zwischen Patrize (10) und Matrize (22),

e) Formung eines Körpers aus roher stückiger keramischer Masse im Formhohlraum (26) unter Bildung eines Kompaktkörpers aus der rohen stückigen keramischen Masse, dessen Innenflächen eine nach Form und Größe mit der Patrize (10) identische Ausnehmung bilden, und

f) Brennen des Kompaktkörpers zu einem harten, monolithischen Keramikkörper (32), wobei die keramische Masse eine solche, eine schrumpffreies Brennen gewährleistende Zusammensetzung hat, daß der gebrannte Keramikkörper (32) nach Form und Größe im wesentlichen gleich ist wie der kompaktkörper vor dem Brennen und der gebrannte Keramikkörper (32) im wesentlichen präzise auf den präparierten Zahnstumpf (36) passende Innerflächen aufweist.

2. Verfahren nach Anspruch 1, dadurch gekennzeichnet, daß vor der Aufformung des Körpers aus Feingießmaterial auf den Körper aus Verbrauchsmaterial die freiliegenden Flächen des Körpers aus Verbrauchsmaterial, der auf die Patrize (10) aufgeformt worden ist, in eine den gewünschten Außenkonturen des Zahnersatzes mindestens annähernd entsprechende Form modelliert werden.

3. Verfahren nach Anspruch 1, dadurch gekennzeichnet, daß alle Flächen des Kompaktkörpers mit Ausnahme der Innenflächen durch Nachformung nach der Aufformung auf den Körper aus Verbrauchsmaterial in eine des gewünschten Außenkonturen des Zahnersatzes mindestens annähernd entsprechende Form gebracht werden.

4. Verfahren nach Anspruch 1, dadurch gekennzeichnet, daß alle Flächen des gebrannten Keramikkörpers (32) mit Ausnahme der Innenflächen mit einem das Aussehen eines natürlichen Zahnes simulierenden Überzug (34) verzehen werden und der Keramikkörper (32) dann zum Aushärten des Überzuges (34) nochmals gebrannt wird.

5. Zahnersatz, dadurch gekennzeichnet, daß er nach dem Verfahren gemäß den Ansprüchen 1, 2, 3, oder 4 hergestellt worden ist.

## Revendications

1. Procédé de fabrication d'un élément dentaire adapté au client, tel qu'une couronne dentaire ou un bridge devant être fixé sur une dent préparée, caractérisé en ce qu'il consiste à:

a. former une matrice qui est une réplique de la dent préparée,

b. mouler contre ladite matrice un corps d'un matériau thermo-plastique éliminable, tel qu'une cire ou un polymère thermo-plastique, qui peut ensuite facilement passer à l'état fluide,

c. mouler un corps d'un matériau de recouvrement contre le corps de matériau éliminable, tandis que le corps de matériau éliminable reste sur ladite matrice, formant ainsi un moule femelle,

d. faire passer ledit corps de matériau éliminable à l'état fluide en y appliquant de la chaleur pour l'enlever d'entre la matrice et du moule femelle, grâce à quoi une cavité de moule est formée entre ladite matrice et ledit moule femelle,

e. mouler un corps de céramique en particules vertes dans ladite cavité de moule, formant ainsi un corps compact vert de céramique en particules ayant, comme surface inférieure, un évidement identique en forme et en taille à ladite matrice, et à

f. cuire ensuite ledit corps compact en un corps céramique monolithique dur, ladite céramique ayant une formule telle qu'elle ne subit aucun retrait pendant la cuisson, de telle sorte que le corps en céramique cuite est substantiellement identique en forme et en taille audit corps compact avant la cuisson, grâce à quoi ledit corps cuit a une surface inférieure qui s'adapte substantiellement à la perfection sur la dent préparée.

2. Procédé selon la revendication 1, caractérisé en ce que, avant le moulage du corps en matériau de recouvrement contre le corps de matériau éliminable, il est donné aux surfaces à découvert du corps de matériau éliminable qui ont été moulées contre ladite matrice, une forme qui correspond au moins approximativement à la forme voulue pour les surfaces externes de l'élément.

3. Procédé selon la revendication 1, caractérisé en ce que les surfaces dudit corps compact autres que ladite surface inférieure sont reconformées après la moulage du corps compact à une forme qui est au moins approximativement celle voulue pour les surfaces externes de l'élément.

4. Procédé selon la revendication 1, caractérisé en ce que les surfaces du corps cuit autres que ladite surface inférieure sont revêtues avec un vernis qui simule l'apparence d'une dent naturelle, après quoi le corps est de nouveau cuit pour durcir le vernis.

5. Elément dentaire, caractérisé en ce qu'il est issu de la mise en oeuvre du procédé selon l'une quelconque des revendications 1, 2, 3 ou 4.

Prepare a die to the precise external shape of prepared tooth to be crowned

Prepare a mold having the die as a wall portion and with remainder of mold wall either (A) being precisely the external shape of crown desired or (B) being of another shape such as one only approximating the external shape of crown desired

Form a compact of raw shrink-free ceramic by molding in the prepared mold

If (B) used above, shape external surface of compact to precise external shape desired of crown

Fire the compact to a monolithic body

Apply veneer to the fired body if necessary to provide crown surface appearance desired

FIG. I

FIG. 2

FIG. 3